# EUROPEAN PATENT APPLICATION

(11) **EP 4 675 195 A1**
(43) Date of publication of application: **07.01.2026**
(21) Application number: 24223832.7
(22) Date of filing: 31.12.2024
(51) Int. Cl.: F24H 15/37, F24D 17/00, G05D 23/19, F24D 19/10, F24H 1/20, F24H 9/1818, F24H 9/20, F24H 15/174, F24H 15/223, F24H 15/225, F24H 15/238, F24H 15/281

(54) **METHOD FOR CONTROLLING WATER HEATER, CONTROL DEVICE AND WATER HEATER THEREOF**

(30) Priority: 01.07.2024 CN 202410874633
(71) Applicant: Guandong Midea Kitchen and Bath Appliances MFG. Co., Ltd., Foshan, Guangdong 528311 (CN); Wuhu Midea Kitchen and Bath Appliances Mfg. Co., Ltd., Wuhu, Anhui 241009 (CN)
(72) Inventor: XIE, Yaguang, Foshan, Guangdong Province, 528311 (CN)
(74) Representative: RGTH

(57) **Abstract**

The present invention discloses a method for controlling a water heater, a control device and a water heater thereof. The water heater includes a water storage device, a first water storage area of the water storage device is provided with a hot water outlet and a first heating assembly, a second water storage area of the water storage device is provided with a cold water inlet and a second heating assembly, and the first water storage area is provided above the second water storage area along the direction of gravity. The method includes: obtaining a first water temperature of the first water storage area in response to an instant water instruction; and in response to that the first water temperature is lower than a target temperature, controlling the first heating assembly to operate at a first heating power and controlling the second heating assembly to operate at a second heating power; the first heating power being greater than the second heating power. The present invention aims to improve the user's experience of using the water heater.

## Description

### TECHNICAL FIELD

The present invention relates to the technical field of water heaters, and in particular to a method for controlling a water heater, a control device and a water heater thereof.

### BACKGROUND

In an electric water heater, in order to ensure that the water in the water storage device therein can be heated evenly, the heating assembly provided therein is generally provided adjacent to the bottom of the water storage device. However, in actual use, if the user needs to use hot water, the user must wait until the water in the entire water storage device is heated, the waiting time is too long, which affects the user's experience.

### SUMMARY

The main purpose of the present invention is to provide a method for controlling a water heater, a control device and a water heater thereof, aiming to improve the user's experience of using the water heater and meet the user's demand for quick water use.

To achieve the above purpose, the present invention proposes a method for controlling a water heater, the water heater comprises a water storage device, a first water storage area of the water storage device is provided with a hot water outlet and a first heating assembly, the first heating assembly is provided adjacent to a top of the water storage device, a second water storage area of the water storage device is provided with a cold water inlet and a second heating assembly, the second heating assembly is provided adjacent to a bottom of the water storage device, the first water storage area is provided above the second water storage area along a direction of gravity, and the method comprises:
obtaining a first water temperature of the first water storage area in response to an instant water usage instruction; and
in response to the first water temperature being lower than a target temperature, controlling the first heating assembly to operate according to a first heating power and controlling the second heating assembly to operate according to a second heating power; the first heating power being greater than the second heating power.

In an embodiment, the first heating power is lower than or equal to a heating power threshold of the water heater; the second heating power is zero; or,
both the first heating power and the second heating power are greater than zero.

In an embodiment, the first heating power and the second heating power are adjusted according to a first preset logic based a change of the first water temperature; the first preset logic comprising: the first water temperature is inversely proportional to a power difference between the first heating power and the second heating power.

In an embodiment, the method further comprises: determining the target temperature based on a setting instruction.

In an embodiment, the method further comprises:
determining the target temperature based on a working parameter of the water heater; the working parameter comprises at least one of inlet water temperature, inlet water flow rate, outlet water flow rate and mixed water temperature.

In an embodiment, the working parameter comprises the inlet water temperature;
determining the target temperature based on the working parameter of the water heater comprises:
determining the target temperature based on the inlet water temperature; the inlet water temperature and the target temperature are inversely proportional.

In an embodiment, the method further comprises: determining the target temperature based on a user's water use habit.

In an embodiment, the determining the target temperature based on the user's water use habit comprises:
obtaining amount of water outflow of the water storage device in response to the first water temperature reaching the target temperature;
increasing the current target temperature as a new target temperature in response to the amount of water outflow being greater than preset amount of water; and
decreasing the current target temperature as the new target temperature in response to the amount of water outflow being less than the preset amount of water.

In an embodiment, increasing the current target temperature as the new target temperature in response to the amount of water outflow being greater than the preset amount of water comprises:
increasing the current target temperature as the new target temperature in response to that a number of times the amount of water outflow being greater than the preset amount of water reaches a preset first number of times; and/or,
decreasing the current target temperature as the new target temperature in response to the amount of water outflow being less than the preset amount of water comprises:
decreasing the current target temperature as the new target temperature in response to that a number of times the amount of water outflow being less than the preset amount of water reaches a preset second number of times.

In an embodiment, after the in response to the first water temperature being lower than the target temperature, controlling the first heating assembly to operate according to the first heating power and controlling the second heating assembly to operate according to the second heating power, the method further comprises:
prompting a user in response to the first water temperature reaching the target temperature.

In an embodiment, after the prompting the user in response to the first water temperature reaching the target temperature, the method further comprises:
in response to receiving first feedback information, controlling the water heater to enter insulation state to ensure that difference between the first water temperature and the target temperature being lower than preset temperature difference; and
in response to receiving second feedback information or failing to receiving the first feedback information within a preset first duration, controlling the first heating assembly to operate according to a third heating power, and controlling the second heating assembly to operate according to a fourth heating power; the third heating power being lower than the fourth heating power.

In an embodiment, the third heating power is lower than or equal to the heating power threshold of the water heater; the fourth heating power is zero; or
both the third heating power and the fourth heating power are greater than zero.

In an embodiment, after the in response to that the first water temperature is lower than the target temperature, controlling the first heating assembly to operate according to the first heating power and controlling the second heating assembly to operate according to the second heating power, the method further comprises:
in response to the first water temperature reaching the target temperature, controlling the first heating assembly to operate according to a third heating power, and controlling the second heating assembly to operate according to a fourth heating power, or controlling the water heater to enter insulation state, to ensure that difference between the first water temperature and the target temperature being lower than preset temperature difference; and
the third heating power being lower than the fourth heating power.

In an embodiment, the third heating power is lower than or equal to the heating power threshold of the water heater; the fourth heating power is zero; or
both the third heating power and the fourth heating power are greater than zero.

In an embodiment, the controlling the first heating assembly to operate according to the third heating power, and controlling the second heating assembly to operate according to the fourth heating power, or controlling the water heater to enter the insulation state comprises:
based on a user's water use habit, controlling the first heating assembly to operate according to the third heating power, and controlling the second heating assembly to operate according to the fourth heating power, or controlling the water heater to enter the insulation state, to ensure that the difference between the first water temperature and the target temperature being lower than the preset temperature difference.

In an embodiment, the based on the user's water use habit, controlling the first heating assembly to operate according to the third heating power, and controlling the second heating assembly to operate according to the fourth heating power, or controlling the water heater to enter the insulation state, to ensure that the difference between the first water temperature and the target temperature being lower than the preset temperature difference comprises:
obtaining amount of water outflow of the water storage device, and recording a number of times the amount of water outflow being greater than preset amount of water;
controlling the first heating assembly to operate according to the third heating power and controlling the second heating assembly to operate according to the fourth heating power in response to that a recorded number of times the amount of water outflow being greater than the preset amount of water reaches a preset third number;
controlling the water heater to enter the insulation state to ensure that the difference between the first water temperature and the target temperature being lower than the preset temperature difference in response to that the recorded number of times the amount of water outflow being greater than the preset amount of water fails to reach the preset third number.

In an embodiment, the based on the user's water use habit, controlling the first heating assembly to operate at the third heating power, and controlling the second heating assembly to operate at the fourth heating power, or controlling the water heater to enter the insulation state comprises:
controlling the water heater to enter the insulation state in response to that the user uses the water heater within a preset second duration, to ensure that the difference between the first water temperature and the target temperature being lower than the preset temperature difference; and
controlling the first heating assembly to operate according to the third heating power and controlling the second heating assembly to operate according to the fourth heating power in response to that the user does not use the water heater within the preset second duration.

The present invention further proposes a control device, comprising: a memory, a processor, and a program for controlling a water heater stored in the memory and executable on the processor, the program for controlling the water heater is configured to implement the method for controlling the water heater as described in any one of the above items.

The present invention also proposes a water heater, comprising: a water storage device, and a control device as described above; and
a first water storage area of the water storage device is provided with a hot water outlet and a first heating assembly, a second water storage area of the water storage device is provided with a cold water inlet and a second heating assembly, and the first water storage area is provided above the second water storage area along a direction of gravity.

In an embodiment, the water storage device comprises an inner tank and a heater; and the heater comprises:
an installation portion; and
a first heating assembly provided adjacent to a top of the inner tank, comprising a first extension section and a second extension section connected in sequence, the first extension section being connected to the installation portion, and at least a portion of the first extension section extending obliquely with respect to a central axis of the installation portion; the second extension section being bent with respect to the first extension section, and a first included angle A is formed between a projection of the first extension section along the central axis of the installation portion and a projection of the second extension section along the central axis of the installation portion; and
a second heating assembly provided adjacent to a bottom of the inner tank, and the second heating assembly being connected to the installation portion.

In an embodiment, the water storage device comprises:
an upper inner tank;
a lower inner tank; and
the upper inner tank and the lower inner tank are communicated with each other and provided along the direction of gravity; the first heating assembly is provided adjacent to the top of the upper inner tank, and the second heating assembly is provided adjacent to the bottom of the lower inner tank.

The present invention proposes a method for controlling a water heater, which comprises: obtaining a first water temperature of the first water storage area in response to an instant water instruction; and in response to the first water temperature being lower than a target temperature, controlling the first heating assembly to operate according to a first heating power and controlling the second heating assembly to operate according to a second heating power; the first heating power being greater than the second heating power. Thus, in practical applications, since in the water storage device, the hot water outlet and the first heating assembly are both provided in the first water storage area, the cold water inlet is provided in the second water storage area, and the first water storage area is provided above the second water storage area along the direction of gravity. Therefore, when the user wants to use water quickly, the control device in the water heater will respond to the instant water instruction, to allow the first heating assembly provided adjacent to the top of the water storage device starts to work with a relatively large power, so as to ensure that the water in the first water storage area can be quickly heated to the target temperature that can meet the user's water demand and output from the hot water outlet via other pipes and/or valves of the water heater to the user side, so as to meet the user's demand for quick water use, and effectively improve the convenience of the user in using the water heater.

### BRIEF DESCRIPTION OF THE DRAWINGS

The accompanying drawings herein are incorporated into the specification and constitute a part of the specification, showing embodiments consistent with the present invention, and together with the specification, are used to explain the principles of the present invention.

In order to explain the embodiments of the present invention or the technical solutions in the existing technology more clearly, the accompanying drawings needed to be used in the description of the embodiments or the existing technology will be briefly introduced below. Obviously, other accompanying drawings can be obtained based on the provided accompanying drawings without exerting creative efforts for those skilled in the art.
FIG. 1 is a schematic flow chart of a method for controlling a water heater according to an embodiment of the present invention.
FIG. 2 is a schematic flow chart of a method for controlling a water heater according to another embodiment of the present invention.
FIG. 3 is a schematic flow chart of a method for controlling a water heater according to yet another embodiment of the present invention.
FIG. 4 is a schematic flow chart of a method for controlling a water heater according to another embodiment of the present invention.
FIG. 5 is a schematic flow chart of a method for controlling a water heater according to another embodiment of the present invention.
FIG. 6 is a schematic flow chart of a method for controlling a water heater according to another embodiment of the present invention.
FIG. 7 is a schematic flow chart of a method for controlling a water heater according to yet another embodiment of the present invention.
FIG. 8 is a structural schematic view of a heating assembly in a double-tank water heater in exemplary technology.
FIG. 9 is a structural schematic view of a water heater according to an embodiment of the present invention.
FIG. 10 is a structural schematic view of a water heater according to another embodiment of the present invention.
FIG. 11 is a structural schematic view of a heater in a water heater according to another embodiment of the present invention

### Explanation of reference numbers

| | | | |
|---|---|---|---|
| 10 | first heating assembly | 20 | second heating assembly |
| 30 | inner tank | 40 | upper inner tank |
| 50 | lower inner tank | 60 | hot water outlet |
| 70 | cold water inlet | 80 | first water storage area |
| 90 | second water storage area | 100 | installation portion |
| 11 | first extension section | 12 | second extension section |

The realization of the purpose, functional features and advantages of the present invention will be further described in conjunction with the embodiments and with reference to the accompanying drawings.

### DETAILED DESCRIPTION OF THE EMBODIMENTS

It should be understood that the specific embodiments described here are only used to explain the present invention and are not used to limit the present invention.

In order to better understand the technical solution of the present invention, detailed descriptions will be given below in conjunction with the accompanying drawings and specific implementation methods.

It should be understood that, in an electric water heater, in order to ensure that the water in the water storage device therein can be heated evenly, the heating assembly provided therein is generally provided adjacent to the bottom of the water storage device. However, in actual use, if the user needs to use hot water, the user must wait until the water in the entire water storage device is heated, the waiting time is too long, which affects the user's experience of using the water heater.

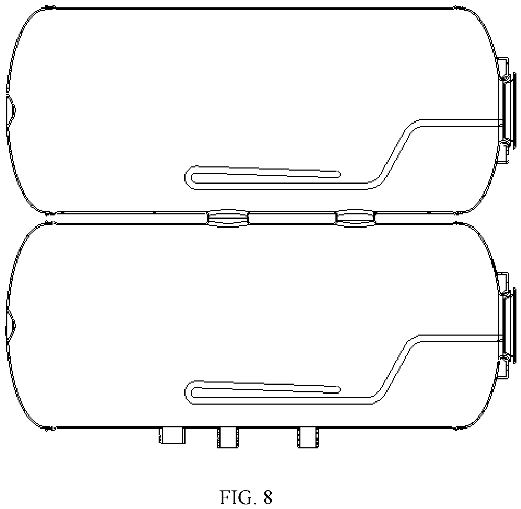

For example, referring to FIG. 8, which shows the structure of a conventional double-tank water heater in the prior art. In order to ensure the uniformity of heating the water in the entire tank, the heating assemblies in the two tanks are provided adjacent to the bottom of each tank. The hot water outlet will be provided in the upper tank (not shown in the figure), and is provided in the middle and upper space of the upper tank (since during the heating process, the hot water is in the upper layer and the cold water is in the lower layer, the hot water outlet must be provided in the middle and upper portion of the upper tank to ensure that the hot water temperature of the outlet water can meet the actual demand), and the cold water inlet is provided in the lower tank (not shown in the figure) for outputting cold water into the double tank. It is understandable that in the structure of the prior art, since the heating assembly is provided at the bottom of the tank, the water at the bottom will be heated first, and then the heat will be gradually transferred to the water at the top, which means that if the user wants to use water quickly, the user must at least wait for the heating assembly of the upper inner tank to heat the water in the entire tank to the target temperature, which takes a long time and greatly affects the user experience.

To this end, the present invention proposes a water heater comprising a water storage device, a first water storage area of the water storage device is provided with a hot water outlet and a first heating assembly, the first heating assembly provided adjacent to a top of the water storage device, a second water storage area of the water storage device is provided with a cold water inlet and a second heating assembly, the second heating assembly provided adjacent to a bottom of the water storage device, and the first water storage area is provided above the second water storage area along a direction of gravity. It can be understood that a control device can be provided in the water heater, and a processor and a memory are integrated in the control device, the memory is configured to store the following method, and the processor is configured to execute the following method. The control device can be implemented by a main controller, such as Microcontroller Unit (MCU), Digital Signal Process (DSP), Field Programmable Gate Array (FPGA), Programmable Logic Controller (PLC), or System On Chip (SOC), etc. The first heating assembly and the second heating assembly can both be implemented by using a heating pipe.

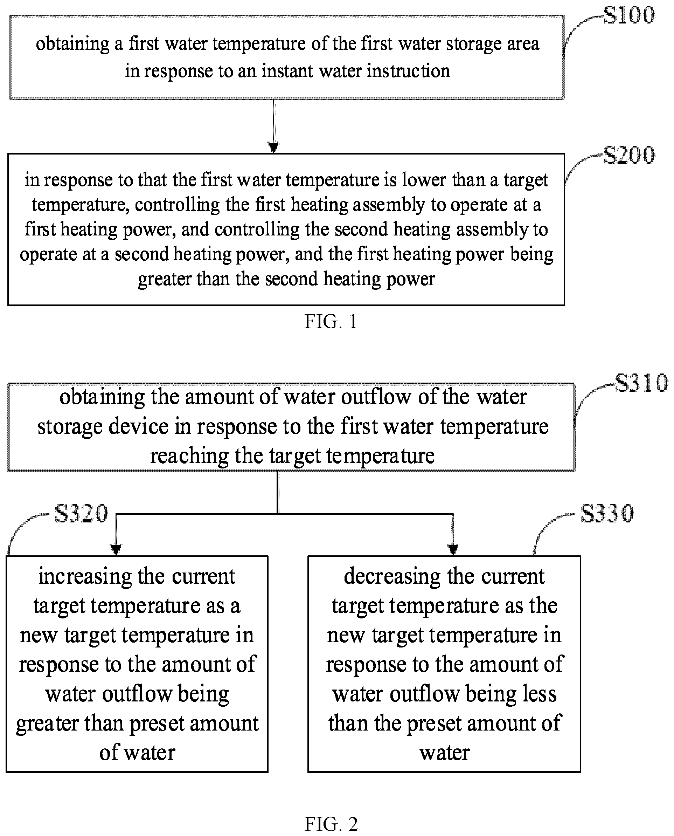

Referring to FIG. 1, in an embodiment of the present invention, the method comprises block S100 and block S200.

At block S100, a first water temperature of the first water storage area is obtained in response to an instant water instruction.

In this embodiment, the water in the first water storage area is the water that can be quickly heated by the first heating assembly. The water volume in the first water storage area can be adaptively set by the researchers and developers by changing the setting position, structure, etc. of the first heating assembly.

In an embodiment, the water heater can be provided with a trigger assembly electrically connected to the control device, such as a physical button, a virtual button, a touch screen, etc. The user can touch the corresponding "quick water use" mark on the trigger assembly to make the trigger assembly output the corresponding instant water instruction to the control device. In an embodiment, the water heater may further be provided with a communication module electrically connected to the control device, and the communication module may be a wireless communication module, such as a Bluetooth communication module, a 4G/5G (the 4th Generation mobile communication technology or the 5th Generation mobile communication technology) communication module, a local area network communication module, a Wireless Fidelity (WIFI) communication module, etc. The communication module may also be a wired communication module, such as a Controller Area Network (CAN) communication module, a Local Interconnect Network (LIN) communication module, etc. The communication module may be connected to an external terminal, such as a user's mobile phone, a wireless remote control, a smart home control panel, etc. The user may operate the external terminal to allow the external terminal outputs an instant water instruction to the control device via the communication module.

In an embodiment, a temperature sensor may be provided in the first water storage area, such as a Negative Temperature Coefficient (NTC) temperature sensor, a thermocouple temperature sensor, an infrared temperature sensor, etc. The number of temperature sensors may be multiple, so as to be distributed at different positions in the first water storage area, so as to improve the accuracy of temperature detection. The control device may determine the first water temperature of the first water storage area according to the detection result transmitted back by at least one temperature sensor. For example, the lowest temperature among the multiple detection results is used as the first water temperature, or the multiple detection results are calculated according to a temperature calculation method preset by the researchers and developers to determine the final first water temperature.

At block S200, in response to that the first water temperature is lower than a target temperature, the first heating assembly is controlled to operate at a first heating power, and the second heating assembly is controlled to operate at a second heating power, and the first heating power being greater than the second heating power.

In this embodiment, when the first water temperature reaches the target temperature, the water in the first water storage area can meet the user's demand for hot water. In an embodiment, the target temperature can be preset in advance by the researchers and developers, such as a certain range of temperatures, such as 40°C to 75°C, or a specific temperature, such as 65°C, 75°C. In an embodiment, the target temperature can also be set by the user. The user can trigger the trigger assembly in the above embodiment and/or operate the external terminal to enable the control device to obtain the setting instruction and set the target temperature according to the setting instruction, so as to meet the different demands of the user for the temperature of the water in the first water storage area during quick water use, thereby improving the user's experience of using the quick water usage function of the water heater of the present invention.

In an embodiment, the control device can further determine the target temperature according to a working parameter of the water heater. The working parameter comprises at least one of inlet water temperature, inlet water flow rate, outlet water flow rate and mixed water temperature. In an embodiment, explaining with working parameters comprising water inlet temperature, and the control device determines the target temperature based on the inlet water temperature; the inlet water temperature and the target temperature are inversely proportional. For example, if the current user sets/research and development presets a reference temperature of 65°C, the control device will adjust the reference temperature of 65°C accordingly to obtain the target temperature according to the calculation logic preset by the researchers and developers, or the preset inlet water temperature-reference temperature adjustment value mapping table, aiming at the higher the inlet water temperature, the lower the target temperature. In this way, in actual application, if the inlet water temperature is relatively high, the duration of quick heating will be shorter, further effectively meeting the user's demand for quickly using hot water; if the inlet water temperature is relatively low, the target temperature of the first water temperature will also be relatively high. It can be understood that in the water heater, particularly in a storage water heater, the heated hot water in the water storage device flows out from the hot water outlet and further passes through the mixing valve, where it is mixed with cold water in a certain proportion and then output to the user. In a home environment, the inlet water temperature is generally related to the ambient temperature, and the cold water in the inlet water and the cold water the mixing valve is generally the same cold water. Therefore, the hot water with a relatively high temperature in the first water storage area can ensure the user's demand for using hot water in a relatively cold environment, effectively improving the user's experience.

When the first water temperature in the first water storage area is lower than the target temperature, the control device will control the first heating assembly to operate at a first heating power, and control the second heating assembly to operate at a second heating power. The first heating power being greater than the second heating power.

In an embodiment, the first heating power is lower than or equal to a heating power threshold of the water heater; the second heating power is zero. For example, the control device controls the first heating assembly to operate according to the heating power threshold of the water heater, and controls the second heating assembly to remain in a stopped state (that is, the second heating power is zero). Setting in this way, the first heating assembly can be heated at the maximum power, so as to increase the first water temperature to the target temperature in the shortest time, thereby meeting the user's demand.

In an embodiment, both the first heating power and the second heating power may be greater than zero, and may be preset in advance by the researchers and developers, or may be set by the user. For example, the heating power threshold of the water heater is 6 kW, the first heating power is 5 kW, and the second heating power is 1 kW. Setting in this way, compared with the above-mentioned prior art, it can realize the user's demand for using water quickly, and further can appropriately heat the water in the entire water storage device at the same time. While satisfying the user's demand for using water quickly, it can also further satisfy the user's subsequent possible large-scale water demand, to allow the total duration of water heating in the entire water storage device can be effectively shortened. For example, if a user needs to use water quickly and take a shower before going out, and then use a large amount of hot water to meet the bathtub bathing demand after returning for a while, thus, after the above control process, not only can the user's quick water use demand be met first, but also the total duration of heating the water in the entire water storage device to the required temperature can be shortened at the same time, effectively meeting the user's demand for use and improving the user's experience.

In an embodiment, based on the above technical purpose of not only being able to meet the user's quick water use demand first, but also being able to shorten the total duration of heating the water in the entire water storage device to the required temperature, in another embodiment, adjusting the first heating power and the second heating power according to a first preset logic according to change of the first water temperature; the first preset logic comprising the first water temperature is inversely proportional to power difference between the first heating power and the second heating power. Similarly, the first heating power and the second heating power are both greater than zero, and as the first water temperature increases, the difference between the first heating power and the second heating power will gradually decrease. For example, the researchers and developers preset a functional relationship between the first water temperature and the power difference in advance, and the control device adaptively adjusts the power difference between the two according to the first water temperature and the functional relationship; or the researchers and developers preset a mapping table of the first water temperature - the first heating power - the second heating power in advance, and the control device can set the first heating power and the second heating power accordingly according to the first water temperature and the above mapping table.

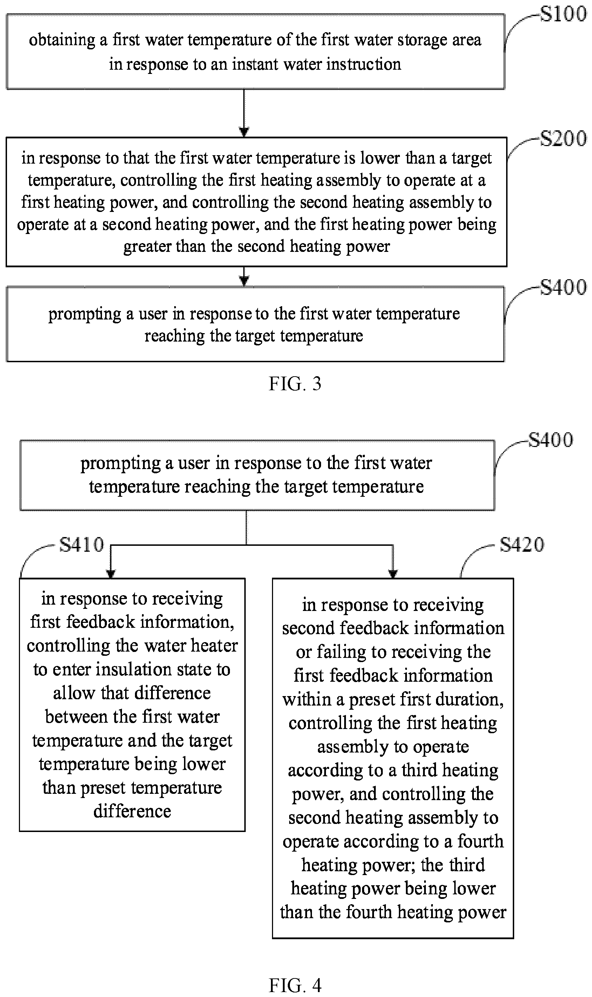

In an embodiment, referring to FIG. 3, after the in response to the first water temperature being lower than the target temperature, controlling the first heating assembly to operate according to the first heating power and controlling the second heating assembly to operate according to the second heating power, the method further comprises block S400.

At block S400, a user is prompted in response to the first water temperature reaching the target temperature.

In this embodiment, the water heater may comprise a prompt assembly, the prompt assembly may use a sound prompt assembly or a light signal, and the control device may control the prompt assembly to remind the user that quick hot water is currently available when the first water temperature reaches the target temperature; and/or, the control device may further send a prompt message to an external terminal via the communication module in the above embodiment, to allow the external terminal displays relevant prompt messages to remind the user that quick hot water is currently available, which effectively improves the convenience of the user in using the water heater.

In an embodiment, when the first water temperature reaches the target temperature, the control device can further control the first heating assembly and the second heating assembly to stop working at the same time, so as to reduce the power consumption of the water heater and save energy; or, the control device can further control the water heater to enter an insulation state, to ensure that the difference between the first water temperature and the target temperature being lower than a preset temperature difference (preset by researchers and developers, such as 1°C, 2°C, etc.), to ensure that the temperature of water in the first water storage area will not differ too much from the target temperature, thereby meeting the user's demand.

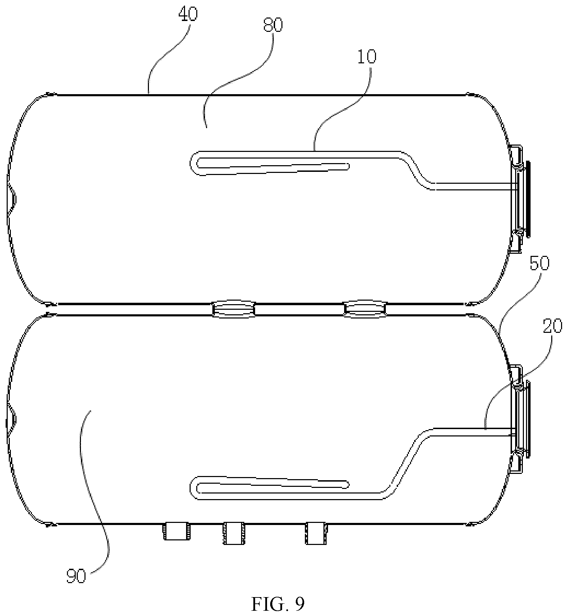

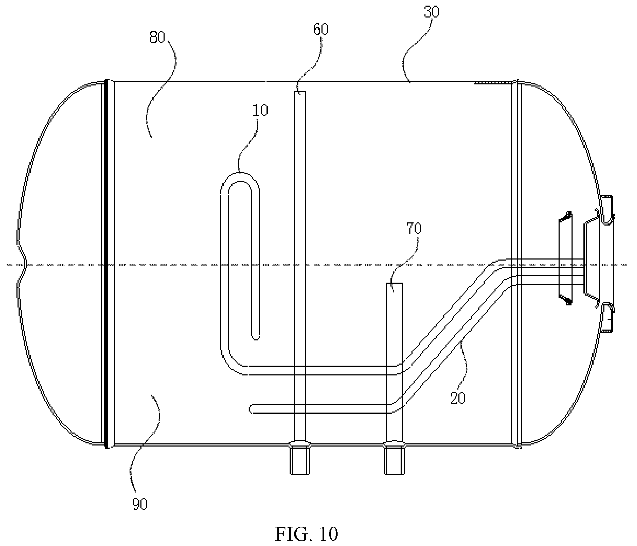

In summary, when the user wants to use water quickly, the control device in the water heater will respond to the instant water instruction, to allow the first heating assembly provided adjacent to the top of the water storage device starts to work with a relatively large power, so as to ensure that the water in the first water storage area can be quickly heated to the target temperature that can meet the user's water demand and output from the hot water outlet via other pipes and/or valves of the water heater to the user side, so as to meet the user's demand for quick water use, and effectively improve the convenience of the user in using the water heater. For example, referring to FIG. 9 and FIG. 10, taking FIG. 9 as an example for explanation, and the structure and effect of the single tank in FIG. 10 are the same. In FIG. 9, the water storage device comprises two inner tanks, which are an upper inner tank and a lower inner tank respectively; the upper inner tank and the lower inner tank are communicated with each other and provided along the direction of gravity; a hot water outlet is provided in the upper inner tank (not shown in the figure), and a cold water inlet is provided in the lower inner tank (not shown in the figure). In an embodiment, the first heating assembly is provided adjacent to the top of the upper inner tank, and the second heating assembly is provided adjacent to the bottom of the lower inner tank. In another embodiment, the first water storage area can be an area of a certain preset volume around the first heating assembly in the upper inner tank (which can be set by the researchers and developers by changing the position and shape of the heating pipe), and the remaining area in the upper inner tank and the lower inner tank are both the second water storage area. The first heating assembly is provided at the position that adjacent to the top of the upper inner tank, and the second heating assembly is provided at the position that adjacent to the bottom of the inner tank. It can be understood that being adjacent to the top is with respect to being adjacent to the bottom, and vice versa. In an example, the first heating assembly can be provided in the middle and upper portion of the upper inner tank, such as at or above the middle position between the center axis of the upper inner tank and the highest point of the top. The second heating assembly can be provided in the middle and lower portion of the lower inner tank, such as at or below the middle position between the center axis of the lower inner tank and the lowest point of the bottom. When the control device receives the instant water instruction, it controls the first heating assembly to operate at the first heating power, and controls the second heating assembly to operate at the second heating power, and the first heating power being greater than the second heating power. At this time, since the first heating assembly is provided close to the top, it can heat part of the water in the middle and upper portion of the upper tank, that is, the water in the first water storage area; since the amount of water in the first water storage area is lower than the amount of water in the entire tank, and the first heating assembly is working at a relatively large power, the water temperature in the first water storage area can be quickly increased until it reaches the target temperature, and then flows out from the hot water outlet in the first water storage area, thereby meeting the user's demand for quick water use.

In an embodiment of the present invention, the method further comprises: determining the target temperature based on a user's water use habit.

In this embodiment, the control device can further adaptively update the target temperature according to the user's water use habit this time or multiple times. The water use habit may comprise the amount of water used by the user each time in the first water storage area, the interval duration between the first water temperature reaching the target temperature and the user's actual water use, the user's water use frequency and the user's water use time period, etc. It can be seen from the above content that the hot water in the water storage device will be output to the user side after being mixed with cold water from the hot water outlet by the mixing valve. Then, it can be understood that if the temperature of the water required by the user side remains unchanged, the higher the temperature of the water in the first water storage area, the less the flow rate of hot water received from the first water storage area per unit time in the mixing valve, that is, for the user, the higher the temperature of the water in the first water storage area, the less the proportion of water in the first water storage area per unit volume of water output by the mixing valve received by the user side. In other words, the higher the target temperature, the more water that can be used quickly for the user (the water that is finally output to the user side). Therefore, according to the user's water use habit, adjusting the target temperature adaptively can meet the user's actual water demand.

Referring to FIG. 2, in an embodiment of the present invention, the determining the target temperature based on the user's water use habit comprises block S310, block S320 and block S330.

At block S310, amount of water outflow of the water storage device is obtained in response to the first water temperature reaching the target temperature.

In this embodiment, a flow meter may be provided at the hot water outlet of the water heater, and the control device may determine the amount of water outflow of the current water storage device according to the flow meter; or, a liquid level detection device is provided in the water storage device, and the control device may determine the amount of water outflow of the current water storage device according to the liquid level in the current water storage device according to the calculation formula or mapping table preset by the researchers and developers.

At block S320, the current target temperature is increased as a new target temperature in response to the amount of water outflow being greater than preset amount of water.

In this embodiment, the preset amount of water is the amount of water in the first water storage area, that is, the amount of water that can meet the user's quick water use demand. in response to the first water temperature reaching the target temperature, if the amount of water outflow being greater than the preset amount of water, it means that the user actually uses more water in the process of meeting the user's quick water use demand. Therefore, at this time, the control device will increase the current target temperature as a new target temperature, such as increasing the preset value set by the researchers and developers, or matching the corresponding increase value according to the amount of water outflow. Setting in this way, the control device can adjust the target temperature in time when it autonomously recognizes that the user's quick water use demand is not actually met, so as to meet the user's next quick water use demand.

Furthermore, for the accuracy of adjusting the target temperature, in an embodiment, the increasing the current target temperature as the new target temperature in response to the amount of water outflow being greater than the preset amount of water comprises: increasing the current target temperature as the new target temperature in response to that a number of times the amount of water outflow being greater than the preset amount of water reaches a preset first number of times (preset by researchers and developers). After receiving the instant water instruction and quickly heating the water in the first water storage area to the target temperature, the control device will record the number of times the amount of water outflow being greater than the preset amount of water while recording the amount of water outflow. If the cumulative number of times reaches the preset first number of times, or the cumulative number of times within a certain time period reaches the preset first number of times, or the number of times of consecutive occurrences reaches the preset first number of times, then the control device will determine that the current target temperature is indeed unable to meet the actual water consumption demand of the user's quick water use, and will increase the target temperature according to the above embodiment process, to allow not only the user's demand for quick water use next time is met, but also the user's actual water consumption can be judged more accurately.

At block S330, the current target temperature is decreased as the new target temperature in response to the amount of water outflow being less than the preset amount of water.

Similar to the above process, if the amount of water outflow being less than the preset amount of water, it means that the user actually uses less water in order to meet the user's quick water use demand, to allow there is still residual water in the first water storage device. Therefore, at this time, the control device will decrease the current target temperature as the new target temperature, such as reducing the preset value set by the researchers and developers, or matching the corresponding reduction value according to the amount of water outflow. Setting in this way, the control device can adjust the target temperature in time when it autonomously recognizes that the user's demand for quick water use will actually be exceeded, so as to further speed up the heating rate of the water in the first water storage area next time while satisfying the user's demand for quick water use next time, further shorten the waiting time of the user, and further reduce the power consumption of the water heater at the same time.

Similarly, for the accuracy of adjusting the target temperature, in an embodiment, the decreasing the current target temperature as the new target temperature in response to the amount of water outflow being less than the preset amount of water comprises: decreasing the current target temperature as the new target temperature in response to that a number of times the amount of water outflow being less than the preset amount of water reaches a preset second number of times (preset by the researchers and developers). After receiving the instant water instruction and quickly heating the water in the first water storage area to the target temperature, the control device will record the number of times the amount of water outflow being less than the preset amount of water while recording the amount of water outflow. If the cumulative number of times reaches the preset second number of times, or the cumulative number of times within a certain time period reaches the preset second number of times, or the number of times of consecutive occurrences reaches the preset second number of times, then the control device will determine that the current target temperature will exceed the actual water consumption demand of the user for quick water use, and then the target temperature will be lowered according to the above embodiment process. In this way, not only the user's demand for quick water use next time is met, the user's waiting time is shortened and the power consumption of the water heater is reduced, but also the actual water consumption of the user can be judged more accurately.

In an embodiment of the present invention, based on the above embodiment of prompting the user after reaching the target temperature, referring to FIG. 4, after the prompting the user in response to the first water temperature reaching the target temperature, the method further comprises block S410 and block S420.

At block S410, in response to receiving first feedback information, the water heater is controlled to enter insulation state to ensure that difference between the first water temperature and the target temperature being lower than preset temperature difference.

At block S420, in response to receiving second feedback information or failing to receiving the first feedback information within a preset first duration, the first heating assembly is controlled to operate according to a third heating power, and the second heating assembly is controlled to operate according to a fourth heating power; the third heating power being lower than the fourth heating power.

In this embodiment, the user can operate the external terminal or the corresponding trigger assembly on the water heater to make the control device receive the first feedback information or the second feedback information. If the control device receives the first feedback information, it means that the user currently only needs to meet the demand for quick water use. In an embodiment, at this time, the control device will make the water heater enter the insulation state, to ensure that the difference between the first water temperature and the target temperature being lower than the preset temperature difference (set by the researchers and developers). For example, first controlling the first heating assembly and the second heating assembly to stop working, and controlling the first heating assembly and/or the second heating assembly to increase the first water temperature when the first water temperature drops to the point where the difference between the first water temperature and the target temperature reaches the preset temperature difference. It is understandable that if the target temperature is a range value, then the difference between the first water temperature and the lower limit value in the range value of the target temperature can be made lower than the preset temperature difference. In another embodiment, the control device can further directly control the first heating assembly and the second heating assembly to stop working, so as to reduce the power consumption of the water heater and improve the energy-saving performance of the water heater.

If the control device receives the second feedback information or does not receive the first feedback information within the preset first duration, it means that the user's current demand may not only be a demand for quick water use, but may also have a subsequent large-scale water demand. Then, at this time, the control device controls the first heating assembly to operate at the third heating power and controls the second heating assembly to operate at the fourth heating power, and the third heating power being lower than the fourth heating power. In an embodiment, the third heating power being lower than or equal to the heating power threshold of the water heater; the fourth heating power being zero. In an embodiment, both the third heating power and the fourth heating power may also be greater than zero, so as to keep the water in the first water storage area warm while achieving large-scale heating. As can be seen from the above content, the second heating assembly is provided adjacent to the bottom of the water storage device, so the control device controls the second heating assembly to operate at a relatively high power, which can evenly heat the water in the entire water storage device to meet the user's subsequent large-scale use demand. With such a setting, the water heater based on the control method of this application can not only meet the user's demand for quick water use, but also further ensure the user's subsequent large-scale water use demand, further improving the user's convenience and experience in using the water heater.

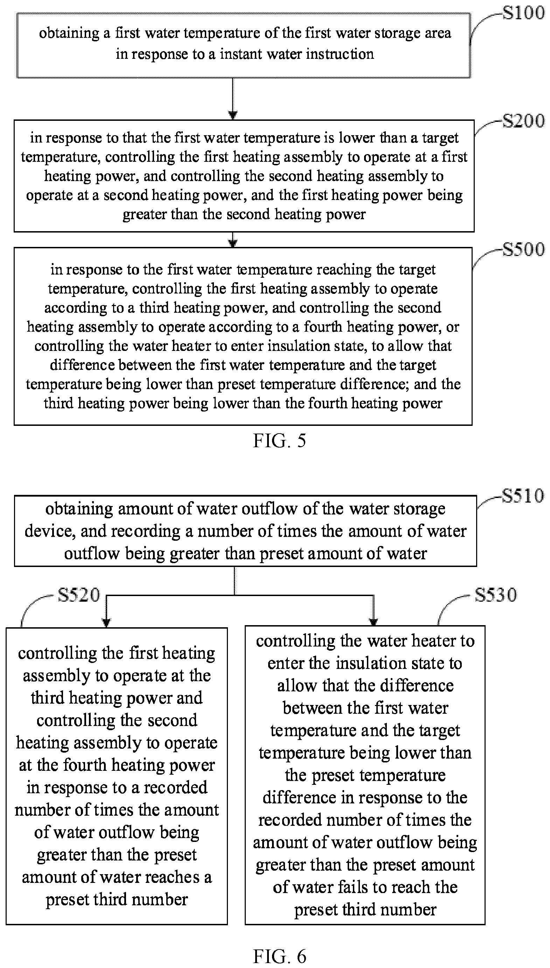

In an embodiment of the present invention, based on any of the above embodiments, referring to FIG. 5, after the in response to that the first water temperature is lower than the target temperature, controlling the first heating assembly to operate according to the first heating power and controlling the second heating assembly to operate according to the second heating power, the method further comprises block S500.

At block S500, in response to the first water temperature reaching the target temperature, the first heating assembly is controlled to operate according to a third heating power, and the second heating assembly is controlled to operate according to a fourth heating power, or controlling the water heater to enter insulation state, to ensure that difference between the first water temperature and the target temperature being lower than preset temperature difference; and the third heating power being lower than the fourth heating power.

In this embodiment, after the first water temperature reaches the target water temperature, that is, after completing the instant water instruction demand, the control device can control the water heater to enter the insulation state to ensure that the difference between the first water temperature and the target temperature being lower than the preset temperature difference, or heat the water in the entire water storage device to meet the subsequent large-scale water demand of the user.

In an embodiment, when the control device controls the water heater to enter the insulation state, the difference between the first water temperature and the target temperature will be caused to be lower than the preset temperature difference. For example, first controlling the first heating assembly and the second heating assembly to stop working, and controlling the first heating assembly and/or the second heating assembly to increase the first water temperature when the first water temperature drops to the point where the difference between the first water temperature and the target temperature reaches the preset temperature difference. It is understandable that if the target temperature is a range value, then the difference between the first water temperature and the lower limit value in the range value of the target temperature can be made lower than the preset temperature difference.

In another embodiment, the control device can further directly control the first heating assembly and the second heating assembly to stop working, so as to reduce the power consumption of the water heater and improve the energy-saving performance of the water heater.

In an embodiment, when the control device needs to meet the subsequent large-scale water demand of the user, it will control the first heating assembly to operate at the third heating power and control the second heating assembly to operate at the fourth heating power. In an embodiment, the third heating power being lower than or equal to the heating power threshold of the water heater; the fourth heating power being zero. In an embodiment, both the third heating power and the fourth heating power can also be greater than zero, so as to keep the water in the first water storage area warm while achieving large-scale heating. As can be seen from the above content, the second heating assembly is provided adjacent to the bottom of the water storage device, so the control device controls the second heating assembly to operate at a relatively high power, which can evenly heat the water in the entire water storage device to meet the user's subsequent large-scale use demand. With such a setting, the water heater based on the control method of this application can not only meet the user's demand for quick water use, but also further ensure the user's subsequent large-scale water use demand, further improving the user's convenience and experience in using the water heater.

In an embodiment of the present invention, based on the embodiment in FIG. 5 above, the controlling the first heating assembly to operate according to the third heating power, and controlling the second heating assembly to operate according to the fourth heating power, or controlling the water heater to enter the insulation state comprises: block S600.

At block S600, based on a user's water use habit, the first heating assembly is controlled to operate at the third heating power, and the second heating assembly is controlled to operate at the fourth heating power, or the water heater is controlled to enter the insulation state, to ensure that the difference between the first water temperature and the target temperature being lower than the preset temperature difference.

In this embodiment, the control device can further independently determine whether to meet the subsequent large-scale water demand or enter the insulation state or both heating assemblies stop working in response to the first water temperature reaching the target temperature according to the user's water use habit this time or multiple times, so as to achieve the alignment between the water heater control and the user's water use habit, and further improve the user's experience. The water use habit may comprise the amount of water used by the user each time in the first water storage area, the interval duration between the first water temperature reaching the target temperature and the user's actual water use, the user's water use frequency and the user's water use time period, etc.

In an embodiment, referring to FIG. 6, the based on the user's water use habit, controlling the first heating assembly to operate according to the third heating power, and controlling the second heating assembly to operate according to the fourth heating power, or controlling the water heater to enter the insulation state, to ensure that the difference between the first water temperature and the target temperature being lower than the preset temperature difference comprises block S510, block S520 and block S530.

At block S510, amount of water outflow of the water storage device is obtained, and a number of times the amount of water outflow being greater than preset amount of water is recorded.

At block S520, the first heating assembly is controlled to operate at the third heating power and the second heating assembly is controlled to operate at the fourth heating power in response to that a recorded number of times the amount of water outflow being greater than the preset amount of water reaches a preset third number.

At block S530, the water heater is controlled to enter the insulation state to ensure that the difference between the first water temperature and the target temperature being lower than the preset temperature difference in response to that the recorded number of times the amount of water outflow being greater than the preset amount of water fails to reach the preset third number.

In this embodiment, how to obtain the amount of water outflow and the process of recording the number of times the amount of water outflow being greater than the preset amount of water can refer to the same content in the above embodiment, which will not be repeated here.

If the recorded number of times the amount of water outflow being greater than the preset amount of water reaches the preset third number of times, the control device determines that the user may also need a large amount of water in addition to quick water use each time, then the first heating assembly will be controlled to operate at the third heating power and the second heating assembly will be controlled to operate at the fourth heating power, so as to meet the user's demand for large-scale water use. The preset third number of times can be one, or a positive integer greater than one, such as four, ten, etc. When the preset third number of times is a positive integer greater than one, in another embodiment, when the accumulated number of times reaches the preset third number of times, or the accumulated number of times within a certain time period reaches the preset third number of times, or the number of consecutive occurrences reaches the preset third number of times, the control device controls the first heating assembly to operate at the third heating power and controls the second heating assembly to operate at the fourth heating power.

If the recorded number of times the amount of water outflow being greater than the preset amount of water does not reach the preset third number of times, the control device will determine that only the user's demand for quick water use is currently satisfied. Then, the water heater will be controlled to enter the insulation state, to ensure that the difference between the first water temperature and the target temperature being lower than the preset temperature difference. Or, the first heating assembly and the second heating assembly are controlled to stop working, thereby reducing the power consumption of the water heater and improving the energy-saving performance of the water heater. The specific embodiment of controlling the water heater to enter the insulation state can refer to the same content in the above embodiment, and will not be repeated here.

In this way, the present invention can autonomously determine whether the user has a large-scale demand for hot water use based on the user's water consumption each time, and adaptively control the working state of the first heating assembly and the second heating assembly according to the judgment result. With the above settings, the intelligence of the water heater based on the present invention and the user experience are effectively improved.

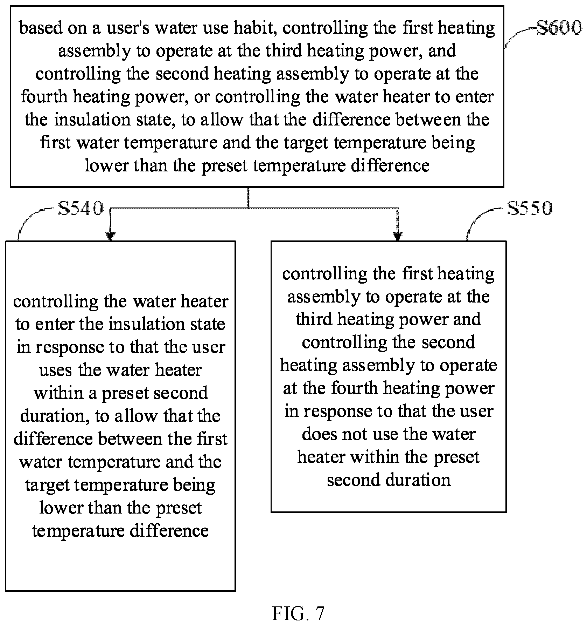

In another embodiment, referring to FIG. 7, the based on the user's water use habit, controlling the first heating assembly to operate according to the third heating power, and controlling the second heating assembly to operate according to the fourth heating power, or controlling the water heater to enter the insulation state comprises block S540 and block S550.

At block S540, the water heater is controlled to enter the insulation state in response to that the user uses the water heater within a preset second duration, to ensure that the difference between the first water temperature and the target temperature being lower than the preset temperature difference.

At block S550, the first heating assembly is controlled to operate at the third heating power and the second heating assembly is controlled to operate at the fourth heating power in response to that the user does not use the water heater within the preset second duration.

In this embodiment, if the user uses the water heater within the preset second duration (preset by the researchers and developers), the control device determines that the current user will directly use water within a short time that the first water temperature reaches the target, that is, the user's current water use demand is to use it quickly in the true sense. In other words, the control device will think that the user currently only needs to meet the user's own demand for quick water use. Then the control device will control the water heater to enter the insulation state, to ensure that the difference between the first water temperature and the target temperature being lower than the preset temperature difference; or, the first heating assembly and the second heating assembly are controlled to stop working, thereby reducing the power consumption of the water heater and improving the energy-saving performance of the water heater. The specific embodiment of controlling the water heater to enter the insulation state can refer to the same content in the above embodiment, which will not be repeated here.

If the user does not use the water heater during the preset second duration, the control device will think that the user may not need quick water use temporarily or determine that the user may have temporarily changed the water demand and needs to use water in large quantities. Then the first heating assembly will be controlled to operate at the third heating power, and the second heating assembly will be controlled to operate at the fourth heating power, so as to meet the user's demand for large-scale water use.

In this way, the present invention can autonomously determine whether the user has a demand for large-scale use of hot water according to whether the user uses the water in the first water storage device in a short time, and adaptively control the working state of the first heating assembly and the second heating assembly according to the judgment result. With the above settings, the intelligence of the water heater based on the present invention and the user's experience are effectively improved.

The present invention further proposes a control device, which comprises: a memory, a processor, and a program for controlling a water heater stored in the memory and executable on the processor, and the program for controlling the water heater is configured to implement the method for controlling the water heater as described in any one of the above items.

It is worth noting that, since the control device of the present invention comprises the above-mentioned method for controlling the water heater. Therefore, the control device of the present invention comprises all the technical solutions of the method for controlling the water heater, and at least has all the beneficial effects brought by the technical solutions of the above-mentioned embodiments, which will not be described one by one here.

The present invention further proposes a water heater, which comprises a water storage device, and a control device as described above. A first water storage area 80 of the water storage device is provided with a hot water outlet 60 and a first heating assembly 10, a second water storage area 90 of the water storage device is provided with a cold water inlet 70 and a second heating assembly 20, and the first water storage area 80 is provided above the second water storage area 90 along a direction of gravity.

It is worth noting that, since the water heater of the present invention comprises the above-mentioned control device. Therefore, the water heater of this application comprises all the technical solutions of the above-mentioned control device, and at least has all the beneficial effects brought by the technical solutions of the above-mentioned embodiments, which will not be described one by one here.

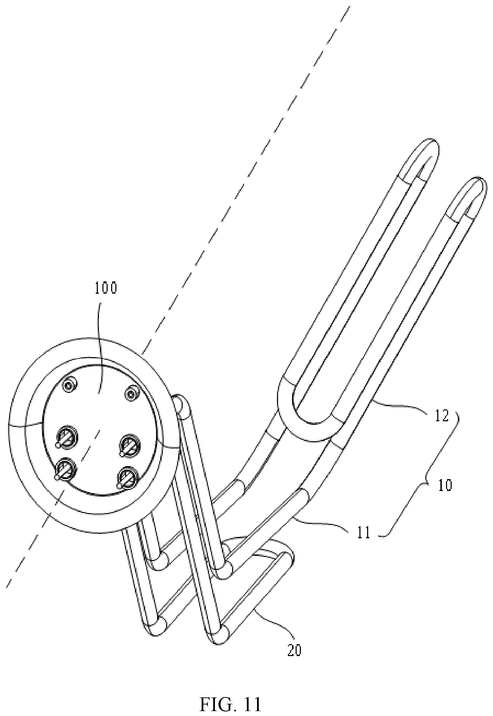

In an embodiment, referring to FIG. 10 and FIG. 11, the water storage device comprises an inner tank 30 and a heater; and the heater comprises: an installation portion 100; and a first heating assembly 10 provided adjacent to a top of the inner tank 30, comprising a first extension section 11 and a second extension section 12 connected in sequence. The first extension section 11 is connected to the installation portion 100, and at least a portion of the first extension section 11 extends obliquely with respect to a central axis of the installation portion 100. The second extension section 12 is bent with respect to the first extension section 11, and a first included angle A is formed between a projection of the first extension section 11 along the central axis of the installation portion 100 and a projection of the second extension section 12 along the central axis of the installation portion 100. A second heating assembly 10 is provided adjacent to a bottom of the inner tank 30, and the second heating assembly 20 is connected to the installation portion 100.

In this embodiment, the first water storage area 80 is the middle and upper portion of the inner tank 30, the second water storage area 90 is the middle and lower portion of the inner tank 30, the hot water outlet 60 is provided in the first water storage area 80, and the cold water inlet 70 is provided in the second water storage area 90. The first heating assembly 10 is provided in the first water storage area 80 of the inner tank 30, the second heating assembly 20 is provided in the second water storage area 90 of the inner tank 30, and the first heating assembly 10 is provided above the second heating assembly 20 along the direction of gravity.

At least part of the first extension section 11 extends obliquely with respect to the central axis of the installation portion 100, to allow the bending position of the second extension section 12 deviates from the central axis of the installation portion 100. After the second extension section 12 is bent, the second extension section 12 extends obliquely with respect to the first extension section 11, to allow the above projection is at a first included angle A, to allow the second extension section 12 does not pass through the central axis of the installation portion 100, to allow the second extension section 12 as a whole can deviate from the central axis of the installation portion 100.

It can be understood that after the heater is installed at the water heater, the second extension section 12 in the first heating assembly 10 will be provided close to the top of the inner tank 30, so as to achieve heating of the water in the first water storage area 80. In addition, after the heater is installed at the water heater, the central axis of the installation portion 100 will be provided parallel to and close to the central axis of the inner tank 30. Thus, after the heater is installed at the inner tank 30 of the water heater by the installation portion 100, the second extension section 12 can have a sufficient extension amount in the radial direction of the inner tank 30, and at the same time, the second extension section 12 can be provided away from the central axis of the inner tank 30, to allow the second extension section 12 will not interfere with the structure inside the inner tank 30, such as the anode member, the water pipe or the like; moreover, the first extension section 11 and the second extension section 12 are provided at an included angle, thus, the heater can be installed at a certain angle, to allow the first extension section 11 and the second extension section 12 are located at the different structures inside the tank 30, such as the same side of the anode member or the water pipe or the like, and the heater as a whole will not interfere with related components. When assembling the water heater, the internal structures of the heater and the inner tank 30, for example, the installation order of components such as water pipes and anode member, do not need to be concerned. When the heater is maintained later, the heater can be easily disassembled and assembled without being interfered by the internal structure of the inner tank 30, such as water pipes, anode member and other components.

In an embodiment, the first included angle A is an acute angle. That is, the first extension section 11 is inclined away from the central axis of the installation portion 100, and a portion of the second extension section 12 close to the first extension section 11 extends in a direction close to the central axis of the installation portion 100, and the second extension section 12 continues to extend and will be away from the central axis of the installation portion 100, to allow the extension length of the second extension section 12 can be increased, which is conducive to expanding the heating range of the second extension section 12, that is, increasing the amount of water in the first water storage area 80. In another embodiment, the first included angle A can also be configured as an obtuse angle.

The heater further comprises a second heating assembly 20. In an embodiment, the second heating assembly 20 and the first extension section 11 extend in parallel, and the second extension section 12 is bent in a direction away from the second heating assembly 20. Specifically, each section of the second heating assembly 20 will extend in the direction of the first connecting section, the inclined section and the second connecting section in sequence, to allow the second heating assembly 20 and the first extension section 11 are parallel. After the heater is installed at the inner tank 30, the second heating assembly 20 will be located below the first extension section 11. In this way, when the water in the inner tank 30 is heated by the first heating assembly 10, water in the upper half of the tank in the inner tank 30 can be quickly heated, thus shortening the heating time, to allow the user can quickly use the hot water, and when the water in the inner tank 30 is heated by the second heating assembly 20, it can ensure that water in the whole tank is heated, so as to provide more hot water to users.

In an embodiment, referring to FIG. 9, the water storage device comprises two inner tanks 30, which are an upper inner tank 40 and a lower inner tank 50 respectively; the upper inner tank 40 and the lower inner tank 50 are communicated with each other and provided along the direction of gravity; a hot water outlet 60 is provided in the upper inner tank 40 (not shown in the figure), and a cold water inlet 70 is provided in the lower innertank 50 (not shown in the figure). In an embodiment, the first heating assembly 10 is provided adjacent to the top of the upper inner tank 40, and the second heating assembly 20 is provided adjacent to the bottom of the lower inner tank 50. In another embodiment, the first water storage area 80 can be an area of a certain preset volume around the first heating assembly 10 in the upper inner tank 40 (which can be set by the researchers and developers by changing the position and shape of the heating pipe), and the remaining area in the upper inner tank 40 and the lower inner tank 50 are both the second water storage area 90. The first heating assembly 10 is provided at the position that adjacent to the top of the upper inner tank 40, and the second heating assembly 20 is provided at the position that adjacent to the bottom of the inner tank 30. It can be understood that being adjacent to the top is with respect to being adjacent to the bottom, and vice versa. In an example, the first heating assembly 10 can be provided in the middle and upper portion of the upper inner tank 40, such as at or above the middle position between the center axis of the upper inner tank 40 and the highest point of the top. The second heating assembly 20 can be provided in the middle and lower portion of the lower inner tank 50, such as at or below the middle position between the center axis of the lower inner tank 50 and the lowest point of the bottom.

The above are only some embodiments of the present invention, and are not intended to limit the scope of the present invention. Under the concept of the present invention, any equivalent structure transformation made by using the description and accompanying drawings of the present invention, or directly or indirectly applied in other related technical fields, is comprised within the scope of the present invention.

## Claims

1. A method for controlling a water heater, **characterized in that** the water heater comprises a water storage device, wherein a first water storage area (80) of the water storage device is provided with a hot water outlet (60) and a first heating assembly (10), the first heating assembly (10) is provided adjacent to a top of the water storage device, wherein a second water storage area (90) of the water storage device is provided with a cold water inlet (70) and a second heating assembly (20), the second heating assembly (20) is provided adjacent to a bottom of the water storage device, wherein the first water storage area (80) is provided above the second water storage area (90) along a direction of gravity, and wherein the method comprises:
(S100) obtaining a first water temperature of the first water storage area (80) in response to an instant water usage instruction; and
(S200) in response to the first water temperature being lower than a target temperature, controlling the first heating assembly (10) to operate according to a first heating power and controlling the second heating assembly (20) to operate according to a second heating power; the first heating power being greater than the second heating power.

2. The method for controlling the water heater according to claim 1, wherein the first heating power is lower than or equal to a heating power threshold of the water heater, the second heating power being zero; or
both the first heating power and the second heating power being greater than zero.

3. The method for controlling the water heater according to claim 1 or 2, **characterized in that** the first heating power and the second heating power are adjusted according to a first preset logic based on a change of the first water temperature, the first preset logic comprising that the first water temperature is inversely proportional to a power difference between the first heating power and the second heating power; and/or
the method for controlling the water heater further comprising:
determining the target temperature based on a setting instruction.

4. The method for controlling the water heater according to any one of claims 1 to 3, further comprising:
determining the target temperature based on a working parameter of the water heater, wherein the working parameter comprises at least one of an inlet water temperature, an inlet water flow rate, an outlet water flow rate and a mixed water temperature.

5. The method for controlling the water heater according to claim 4, wherein the working parameter comprises the inlet water temperature, and
Wherein the determining the target temperature based on the working parameter of the water heater comprises:
determining the target temperature based on the inlet water temperature, wherein the inlet water temperature and the target temperature are inversely proportional.

6. The method for controlling the water heater according to any one of claims 1 to 5, further comprising:
determining the target temperature based on a user's water use habit; preferably
wherein the determining the target temperature based on the user's water use habit comprises:
(S310) obtaining amount of water outflow of the water storage device in response to the first water temperature reaching the target temperature;
(S320) increasing a current target temperature as a new target temperature in response to the amount of water outflow being greater than preset amount of water; and
(S330) decreasing the current target temperature as the new target temperature in response to the amount of water outflow being less than the preset amount of water;
preferably
wherein the (S320) increasing the current target temperature as the new target temperature in response to the amount of water outflow being greater than the preset amount of water comprises:
increasing the current target temperature as the new target temperature in response to that a number of times the amount of water outflow being greater than the preset amount of water reaches a preset first number of times; and/or
the (S330) decreasing the current target temperature as the new target temperature in response to the amount of water outflow being less than the preset amount of water comprises:
decreasing the current target temperature as the new target temperature in response to that a number of times the amount of water outflow being less than the preset amount of water reaches a preset second number of times.

7. The method for controlling the water heater according to any one of claims 1 to 6, wherein after the in response to the first water temperature being lower than the target temperature, controlling the first heating assembly (10) to operate according to the first heating power and controlling the second heating assembly (20) to operate according to the second heating power, the method further comprises:
(S400) prompting a user in response to the first water temperature reaching the target temperature.

8. The method for controlling the water heater according to claim 7, wherein after the (S400) prompting the user in response to the first water temperature reaching the target temperature, the method further comprises:
(S410) in response to receiving first feedback information, controlling the water heater to enter insulation state to ensure that difference between the first water temperature and the target temperature being lower than a preset temperature difference; and
(S420) in response to receiving second feedback information or failing to receiving the first feedback information within a preset first duration, controlling the first heating assembly (10) to operate according to a third heating power, and controlling the second heating assembly (20) to operate according to a fourth heating power; the third heating power being lower than the fourth heating power; preferably
wherein the third heating power is lower than or equal to the heating power threshold of the water heater, the fourth heating power being zero; or
both the third heating power and the fourth heating power being greater than zero.

9. The method for controlling the water heater according to any one of claims 1 to 8, wherein after the in response to that the first water temperature is lower than the target temperature, controlling the first heating assembly (10) to operate according to the first heating power and controlling the second heating assembly (20) to operate according to the second heating power, the method further comprises:
(S500) in response to the first water temperature reaching the target temperature, controlling the first heating assembly (10) to operate according to the third heating power, and controlling the second heating assembly (20) to operate according to the fourth heating power; or controlling the water heater to enter the insulation state, to ensure that difference between the first water temperature and the target temperature being lower than the preset temperature difference; and the third heating power being lower than the fourth heating power.

10. The method for controlling the water heater according to claim 9, wherein the third heating power is lower than or equal to the heating power threshold of the water heater, the fourth heating power being zero; or
both the third heating power and the fourth heating power being greater than zero.

11. The method for controlling the water heater according to claim 9, wherein the controlling the first heating assembly (10) to operate according to the third heating power, and controlling the second heating assembly (20) to operate according to the fourth heating power; or controlling the water heater to enter the insulation state comprises:
(S600) based on the user's water use habit, controlling the first heating assembly (10) to operate according to the third heating power, and controlling the second heating assembly (20) to operate according to the fourth heating power; or controlling the water heater to enter the insulation state, to ensure that the difference between the first water temperature and the target temperature being lower than the preset temperature difference.

12. The method for controlling the water heater according to claim 11, wherein the (5600) based on the user's water use habit, controlling the first heating assembly (10) to operate according to the third heating power, and controlling the second heating assembly (20) to operate according to the fourth heating power; or controlling the water heater to enter the insulation state, to ensure that the difference between the first water temperature and the target temperature being lower than the preset temperature difference comprises:
(S510) obtaining the amount of water outflow of the water storage device, and recording the number of times the amount of water outflow being greater than the preset amount of water;
(S520) controlling the first heating assembly (10) to operate according to the third heating power and controlling the second heating assembly (20) to operate according to the fourth heating power in response to that a recorded number of times the amount of water outflow being greater than the preset amount of water reaches a preset third number; and
(S530) controlling the water heater to enter the insulation state to ensure that the difference between the first water temperature and the target temperature being lower than the preset temperature difference in response to that the recorded number of times the amount of water outflow being greater than the preset amount of water fails to reach the preset third number; or
wherein the based on the user's water use habit, controlling the first heating assembly (10) to operate according to the third heating power, and controlling the second heating assembly (20) to operate according to the fourth heating power, or controlling the water heater to enter the insulation state comprises:
(S540) controlling the water heater to enter the insulation state in response to that the user uses the water heater within a preset second duration, to ensure that the difference between the first water temperature and the target temperature being lower than the preset temperature difference; and
(S550) controlling the first heating assembly (10) to operate according to the third heating power and controlling the second heating assembly (20) to operate according to the fourth heating power in response to that the user does not use the water heater within the preset second duration.

13. A control device, **characterized by** comprising: a memory, a processor, and a program for controlling a water heater stored in the memory and executable on the processor, wherein the program for controlling the water heater is configured to implement a method for controlling the water heater according to any one of claims 1 to 12.

14. A water heater, **characterized by** comprising:
a water storage device; and
a control device according to claim 13,
wherein a first water storage area (80) of the water storage device is provided with a hot water outlet (60) and a first heating assembly (10), wherein a second water storage area (90) of the water storage device is provided with a cold water inlet (70) and a second heating assembly (20), and wherein the first water storage area (80) is provided above the second water storage area (90) along a direction of gravity.

15. The water heater according to claim 14, wherein the water storage device comprises an inner tank (30) and a heater, and wherein the heater comprises:
an installation portion (100);
a first heating assembly (10) provided adjacent to a top of the inner tank (30), the first heating assembly (10) comprising a first extension section (11) and a second extension section (12) connected in sequence, the first extension section (11) being connected to the installation portion (100), and at least a portion of the first extension section (11) extending obliquely with respect to a central axis of the installation portion (100); the second extension section (12) being bent with respect to the first extension section (11), and a first included angle A being formed between a projection of the first extension section (11) along the central axis of the installation portion (100) and a projection of the second extension section (12) along the central axis of the installation portion (100); and
a second heating assembly (20) provided adjacent to a bottom of the inner tank (30), the second heating assembly (20) being connected to the installation portion (100); or
wherein the water storage device comprises:
an upper inner tank (40); and
a lower inner tank (50),
wherein the upper inner tank (40) and the lower inner tank (50) are communicated with each other and provided along the direction of gravity, wherein the first heating assembly (10) is provided adjacent to the top of the upper inner tank (40), and wherein the second heating assembly (20) is provided adjacent to the bottom of the lower inner tank (50).
